# EUROPÄISCHE PATENTSCHRIFT

(11) **EP 0 878 118 B1**
(45) Veröffentlichungstag und Bekanntmachung des Hinweises auf die Patenterteilung: **29.08.2001**
(21) Anmeldenummer: 98108649.9
(22) Anmeldetag: 13.05.1998
(51) Int. Cl.: A01B 73/04

(54) **Einklappbare Kreiselegge mit integrierten Schwenkzylindern**
Foldable rotary harrow with integrated folding cylinders
Herse rotative repliable à cylindres de repliage intégrés

(30) Priorität: 17.05.1997 DE 19720965; 21.04.1998 DE 19817608
(43) Veröffentlichungstag der Anmeldung: 18.11.1998
(73) Patentinhaber: Lemken GmbH & Co. KG, 46519 Alpen (DE)
(72) Erfinder: Gebbeken, Martin, Dipl.-Ing., 46519 Alpen (DE)
(74) Vertreter: Schulte, Jörg, Dipl.-Ing.

(56) Entgegenhaltungen:
- EP-A- 0 422 721
- GB-A- 1 113 334
- GB-A- 1 531 403
- GB-A- 2 071 474
- GB-A- 2 198 323
- US-A- 4 923 017

## Beschreibung

Die Erfindung betrifft ein Bodenbearbeitungsgerät, gemäß dem Oberbegriff des Anspruch 1.

Derartige Kreiseleggen werden dort eingesetzt, wo eine große Flächenleistung erforderlich ist. Aus der DE-PS 31 07 696 ist eine Kreiselegge bekannt, die aus zwei Geräteeinheiten besteht, die am Tragrahmen einklappbar angeordnet sind. Nachteilig ist, dass bei dieser einklappbaren Kreiselegge die Hydraulikzylinder offen und ungeschützt zwischen den einzelnen Rahmenteilen angeordnet sind, dass die Hydraulikzylinder den nutzbaren Freiraum einschränken, was das Anbauen von zusätzlichem Zubehör oder einer Drillmaschine einschränkt und dass die Sicherungselemente, die ein unbeabsichtigtes Ausklappen verhindern sollen, von Hand und nicht automatisch oder fernbedienbar betätigbar sind und ebenfalls offen und ungeschützt am Gerät angeordnet sind. Die DE-GM 295 16 162 zeigt eine einklappbare Kreiselegge, die zwar eine automatische Verriegelung aufweist, die nach dem Einklappen der Geräteeinheiten selbsttätig verriegelt. Auch hier sind nicht nur die Verriegelung, sondern auch die Hydraulikzylinder offen zugänglich und ungeschützt untergebracht. Auch ist der bauliche Freiraum stark eingeschränkt. Für den rauhen praktischen Einsatz sind diese Kreiseleggen von daher nur bedingt einsetzbar. Aus der älteren Patentanmeldung 196 46 992.9 ist eine Kreiselegge bekannt, bei der die Hydraulikzylinder hinter dem Rahmen so angeordnet sind, dass sie weniger Platz benötigen, aber ebenfalls noch ungeschützt sind. Aus der US 4,923,017 ist ein Bodenbearbeitungsgerät bekannt, bei der der Tragrahmen aus einem Zentralrahmen und mit den Geräteeinheiten verbundenen Seitenrahmen besteht und der Zentralrahmen als bezüglich des Hohlraumes den Hydraulikzylinder angepasster Hohlträger ausgebildet ist.

Der Erfindung liegt daher die Aufgabe zugrunde, derartige Bodenbearbeitungsgeräte so auszubilden, dass sie auch mit Drillmaschinen ausgerüstet ein immer sicheres und funktionswahrendes Ein- und Ausklappen der Geräteeinheiten ermöglichen.

Die Aufgabe wird gemäß der Erfindung dadurch gelöst, dass der Tragrahmen aus einem Zentralrahmen und mit den Geräteeinheiten verbundenen Seitenrahmen besteht, wobei der Zentralrahmen als bezüglich des Hohlraumes den Hydraulikzylindern angepasster Hohlträger mit im Hohlträger angeordneten Anlenkpunkten für die Hydraulikzylinder ausgebildet ist und wobei die Seitenrahmen jeweils korrespondierende Anschlagpunkte aufweisen, und dass die mit dem Zentralrahmen verbundenen Seitenrahmen über in Arbeitsrichtung und horizontal angeordnete jeweils beidseitig eines Getriebes liegende Schwenklagerungen für die Geräteeinheiten verfügen, die annähernd mittig der Geräteeinheiten angeordnet sind und eine in deren Längsrichtung vor und eine hinter dem Getriebe positionierte Lagerstelle aufweisen, wobei die Seitenrahmen das Getriebe U-förmig umgreifend ausgebildet sind.

Bei einer derart ausgebildeten Tragrahmenform liegen die Hydraulikzylinder vorteilhaft geschützt im Zentralrahmen, der als Hohlträger ausgebildet ist und so dimensioniert ist, dass die Hydraulikzylinder einfach darin untergebracht und darin festgelegt werden können. Die Hydraulikzylinder sind aber nicht nur auf diese Art und Weise geschützt und sicher untergebracht, sondern sie schränken vorteilhaft den baulichen Freiraum nicht ein, sodass auch andere Geräte problemlos einem derartigen Bodenbearbeitungsgerät zugeordnet werden können. Auch die Transportverriegelung kann im geschützten Hohlträger untergebracht werden, was weiter hinten noch näher erläutert wird. Vorteilhaft ist weiter, dass durch diese geschützte Unterbringung der Hydraulikzylinder dennoch eine besonders günstige Verbindung mit den Seitenrahmen möglich ist, da die Hydraulikzylinder über korrespondierende Anschlagpunkte verfügen. Zweckmäßigerweise sieht die Erfindung vor, dass die Hydraulikzylinder mit ihrem Zylindergehäuse im Hohlträger untergebracht und dort festgelegt sind, während sie mit der Kolbenstange an den Seitenrahmen und den dort angeordneten Anschlagpunkten untergebracht sind. Die Verbindung mit den Anschlagpunkten im Hohlträger und mit den Anschlagpunkten der Seitenrahmen ist gelenkig ausgebildet, sodass die Hydraulikzylinder begrenzt den Bewegungen der gegeneinander verschwenkten Rahmenteile nachgeben können. Durch die geschützte Anordnung und die einen günstigen Freiraum belassende Anordnung ist darüber hinaus erreicht, dass die Klappeinrichtung insgesamt auf Dauer funktionstüchtig bleibt, wobei durch die bestimmte Zuordnung der Hydraulikzylinder zu den Rahmenteilen eine günstige Verschwenkung dieser Seitenrahmen erreicht wird.

Eine günstige Verbindung der Seitenrahmen mit den von ihnen getragenen Geräteeinheiten ist erreicht, wenn die mit dem Zentralrahmen verbundenen Seitenrahmen erfindungsgemäß über in Arbeitsrichtung und horizontal angeordnete jeweils beidseitig des Getriebes liegende Schwenklagerungen für die Geräteeinheiten verfügen, die annähernd mittig der Geräteeinheiten angeordnet sind und eine in deren Längsrichtung vor und eine hinter dem Getriebe positionierte Lagerstelle aufweisen. Dadurch wird eine doppelschnittige Lagerung erreicht, die von der Bauhöhe besonders günstig ist und damit die Zuordnung von Zubehör und den Anbau von Drillmaschinen erleichtert. Darüber hinaus kann so das Getriebe, wie weiter hinten noch erläutert, geschickt umfasst werden, was wie schon erwähnt vor allem günstige Bauhöhen ergibt. Die besonders günstige Zuordnung der Geräteemheiten zu den Seitenrahmen oder umgekehrt ist insbesondere dann erreicht, wenn erfindungsgemäß die Seitenrahmen das Getriebe U-förmig umgreifend ausgebildet sind.

Nach einer zweckmäßigen Ausbildung der Erfindung ist vorgesehen, dass die Seitenrahmen um horizontale, in Arbeitsrichtung versetzt liegende Schwenkachsen schwenkbar ausgebildet sind und dass die Anlenkpunkte im Abstand dazu vor Kopf der Seitenrahmen liegend angeordnet sind. Diese besondere Anordnung der Schwenkachsen einerseits und der Anlenkpunkte andererseits ermöglicht eine günstige Einleitung der Kräfte, die über die Hydraulikzylinder aufgebracht werden, ohne dass es zu Überanspruchungen in den miteinander verbundenen Punkten kommen kann.

Um die Zylinder günstig unterbringen zu können, ist es nicht unbedingt erforderlich, sie in einen geschlossenen Zentralrahmen einzubringen. Vielmehr sieht die Erfindung vor, dass der Zentralrahmen endseitig offen und etwa mittig die Anlenkpunkte für je einen Hydraulikzylinder aufweisend ausgebildet ist. Damit können die Hydraulikzylinder günstig montiert werden und sind auch jederzeit wieder erreichbar, wenn Reparaturen o. ä. notwendig werden sollten. Darüber hinaus reicht diese "halbgeschlossene" Ausführung aus, um die Hydraulikzylinder wirksam zu schützen.

Eine weitere, das Eindringen von Schmutz und Erde neutralisierende Ausführung des Zentralrahmens sieht vor, dass er als nach unten offenes, einige über die Länge verteilt angeordnete Querverbinder aufweisendes U-Profil ausgebildet ist. Etwa eingedrungener Schmutz kann so problemlos durch den offenen Boden nach unten fallen. Außerdem kann auf diese Art und Weise der jeweilige Hydraulikzylinder leichter mit dem zugeordneten Anlenkpunkt verbunden werden.

Eine starre Verbindung zwischen Seitenrahmen und Geräteeinheiten wird gemäß der Erfindung vorteilhaft dadurch vermieden, dass die Schwenklagerungen Pendelachsen aufweisen, die in ihrer Schwenkfreiheit begrenzbar ausgebildet sind. Schon dadurch, dass die Schwenklagerungen bzw. die Lagerstellen versetzt zueinander angeordnet sind, wird eine derartige Begrenzung der Schwenkfreiheit erreicht. Durch eine bestimmte Ausbildung der Schwenklagerung wird diese Eigenschaft noch optimiert.

Beim Transport derartiger Bodenbearbeitungsgeräte über die Straße und über Wege werden die entsprechend verschwenkten Seitenrahmen über die Hydraulikzylinder in ihrer Position gehalten und arretiert. Um hier einen Ausfall der Hydraulikzylinder beispielsweise durch Beschädigung von Hydraulikleitungen zu vermeiden, sieht die Erfindung vor, dass den Seitenrahmen eine gegen ein unbeabsichtigtes Ausschwenken der Geräteeinheiten sperrende Transportverriegelung zugeordnet ist. Diese sorgt dafür, dass zusätzlich eine mechanische Verriegelung wirksam wird, die die Seitenrahmen auch dann gegen Ausschwenken sichert, wenn die Hydraulikeinheit beschädigt sein sollte oder sonstwie außer Kraft ist.

Eine besonders zweckmäßige Ausbildung der Transportverriegelung ist die, bei der sie über einen im Hohlträger verschieblich angeordneten Fallriegel verfügt, der an einem Ende über den Anlenkpunkt mit dem Seitenrahmen gelenkig verbunden ist und am anderen, auf dem Boden des Hohlträgers schleifenden Ende eine sich im Sperrzustand gegen die Kante des Hohlträgers abstützende Nase aufweist. Mit dem Ausfahren des Hydraulikzylinders wird auch der Fallriegel im Hohlträger mit verschoben, da er am Anlenkpunkt der Kolbenstange mit befestigt ist. Er rutscht leicht über den Boden des Hohlträgers und fällt endseitig mit seiner Nase hinter die Kante, sodass dann der Seitenrahmen nicht wieder unbeabsichtigt ausschwenken kann. Vielmehr stützt er sich quasi auf die Nase bzw. den Fallriegel ab. Soll nun bewusst die Transportverriegelung aufgehoben, d. h. also der Seitenrahmen ausgeschwenkt werden, so wird der Fallriegel aus dieser Position herausgedrückt und der Hydraulikzylinder kann einfahren und dabei den Seitenrahmen mit ausschwenken und zwar um den besagten Anlenkpunkt, an dem auch der Fallriegel schwenkbar befestigt ist.

Um das Lösen der Transportverriegelung zu erleichtern, sieht die Erfindung vor, dass dem Fallriegel eine Klinke mit Seilzug zugeordnet ist, die am Zentralrahmen schwenkbar angeordnet ist und eine gegen den Fallriegel anhebbare Platte aufweist. Mit Betätigung des Seilzuges wird die Klinke verschwenkt und hebt mit der Platte den Fallriegel an, sodass dieser aus seiner Sperrposition herausgehoben und somit insgesamt entriegelt wird. Die Form und Ausbildung der Platte sorgt dafür, dass der Fallriegel auch richtig erfasst und angehoben wird.

Aus der Transportstellung in die Arbeitsstellung werden die Seitenrahmen über die Hydraulikzylinder verschwenkt. Um hier eine immer gleiche und optimale Endposition zu erreichen, weisen die Seitenarme und der Zentralrahmen einen die ausgeklappte Stellung vorgebenden, einstellbar ausgebildeten Anschlag auf. Dieser Anschlag kann verstellt werden, sodass Korrekturen möglich sind. Auf jeden Fall erreicht der Seitenrahmen damit eine immer gleiche und optimale Position, in der die Arbeitswerkzeuge auf den zu bearbeitenden Boden einwirken.

Um eine Dammbildung zu verhindern, sind die um den Hohlträger schwenkbar gelagerten Geräteeinheiten mit einer die Erde über eine Führungsschiene nach innen leitenden Seitenplatte ausgerüstet.

Zur Vermeidung von Schäden und zur Anpassung an die jeweils vorgegebene Arbeitstiefe sind die Seitenplatten um horizontale Achsen verschwenkbar ausgebildet, wobei sich diese Achsen an der Oberseite der Geräteeinheiten befinden.

Eine weitere Anpassbarkeit ergibt sich dadurch, dass die Führungsschiene höhenverstellbar mit der Seitenplatte verbunden ist, wobei sie auch oder zusätzlich in Fahrtrichtung bzw. entgegengesetzt verschiebbar mit der Seitenplatte verbunden sein kann. Damit ist insgesamt eine Maschine geschaffen, die den jeweiligen Bedingungen besonders gut anpassbar ist.

Die Erfindung zeichnet sich insbesondere dadurch aus, dass eine auch beim zusätzlichen Einsatz von Drillmaschinen immer gut zu führende und ein funktionswahrendes Ein- und Ausklappen sichernde Geräteeinheit vorhanden ist. Diese Geräteeinheit ermöglicht den zusätzlichen Anbau weiterer Arbeitsmittel oder Zusatzgeräte dadurch, dass die Hydraulikzylinder, aber auch die weiteren Teile, die insbesondere dem Schwenkvorgang dienen, platzsparend und zugleich geschützt untergebracht sind, wobei dies insbesondere für die empfindlichen Hydraulikzylinder gilt, die zum Schwenkvorgang der Seitenrahmen benötigt werden. Darüber hinaus ist eine Transportverriegelung geschaffen, die im Hohlträger mit geschützt untergebracht werden kann und die immer funktionstüchtig ist und darüber hinaus Freiraumvorteile aufweist.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Fig. 1: eine Kreiselegge in Rückansicht mit einer eingeklappten und einer ausgeklappten Geräteeinheit,
- Fig. 2: eine ausgeklappte Geräteeinheit in Vorderansicht,
- Fig. 3: eine ausgeklappte Geräteeinheit in Draufsicht,
- Fig. 4: eine Detailansicht der Verriegelung in verriegelter Transportstellung,
- Fig. 5: eine Teilansicht der Verriegelung mit Auslösemechanismus und
- Fig. 6: eine Detailansicht der Verriegelung in entriegelter Arbeitsstellung.

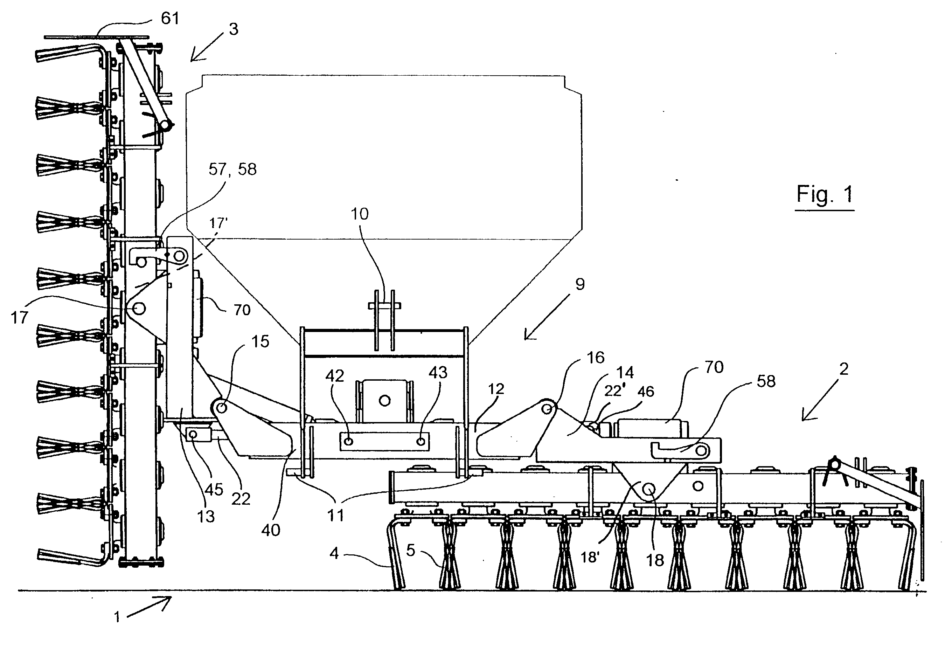

Fig. 1 zeigt eine breite und einklappbare Kreiselegge 1 mit zwei Geräteeinheiten 2, 3. Diese Geräteeinheiten 2, 3 verfügen über angetriebene Arbeitswerkzeuge 4, 5. Jede Geräteeinheit 2, 3 weist ein Getriebe 70 auf. Die Geräteeinheiten 2, 3 sind über Schwenklagerungen 17, 18 mit den Seitenrahmen 13, 14 verbunden, wobei diese Seitenrahmen 13, 14 zusammen mit dem Zentralrahmen 12 den Tragrahmen 9 bilden. Der Tragrahmen 9 bzw. der Zentralrahmen 12 weist eine Verbindungseinrichtung mit Verbindungspunkten 10, 11 auf. Diese Verbindungspunkte 10, 11 sind zum Anbau des Gerätes bzw. der Kreiselegge 1 an ein Zugfahrzeug gedacht.

Der Zentralrahmen 12 weist ein Mittelgetriebe auf, über das die Getriebe 70 der Geräteeinheiten 2, 3 für den Antrieb der Arbeitswerkzeuge 4, 5 angetrieben werden. Zur Vereinfachung zeigt die Fig. 1 zum einen eine eingeklappte Geräteeinheit 3 und eine ausgeklappte Geräteeinheit 2. Zur Sicherung der Transportbreite wird die Schwenkbarkeit der Geräteeinheiten 2, 3 über im Abstand zu den Schwenklagerungen 17, 18 angeordnete Begrenzungsvorrichtungen 57, 58 begrenzt. Die Seitenrahmen 13, 14 sind schwenkbar um die Schwenkachsen 15, 16 mit dem Zentralrahmen 12 verbunden.

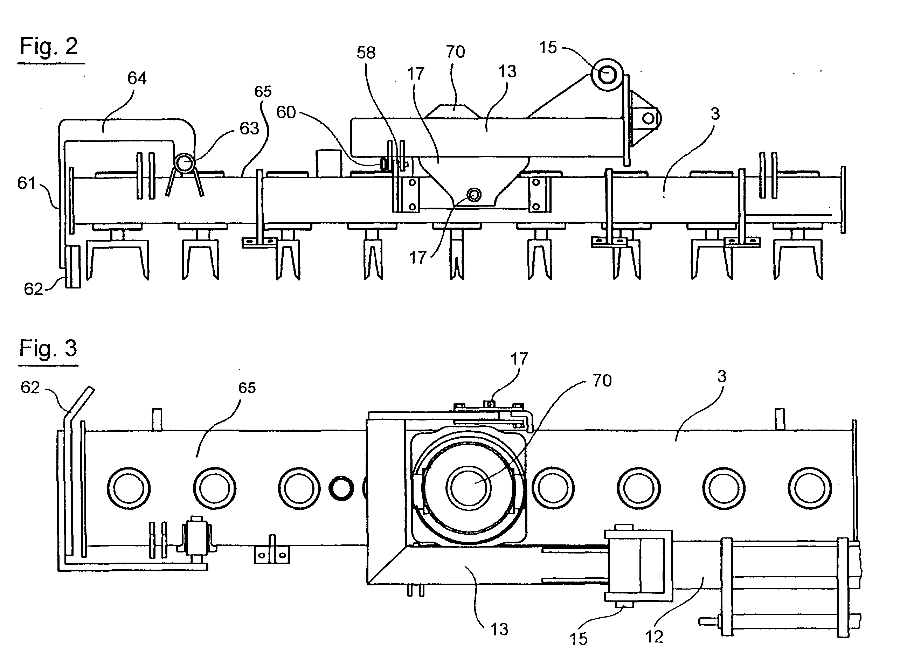

Die Fig. 2 zeigt die Vorderansicht einer Geräteeinheit 3, die über die Schwenklagerung 17 mit dem Seitenrahmen 13 verbunden ist. Zur Vereinfachung wird der Seitenrahmen 13 vom Zentralrahmen 12 losgelöst dargestellt. Zur Begrenzung der freien Schwenkbarkeit der Geräteeinheit 3 zum Seitenrahmen 13 ist hier eine alternative Begrenzungsvorrichtung 58 mit Steckstift 60 vorgesehen. Außen an der Geräteeinheit 3 befindet sich eine Seitenplatte 61, die über eine Achse 63 auf der Oberseite 65 der Geräteeinheit 2 bzw. 3 schwenkbar ist und über den Arm 64 verbunden ist. Die Seitenplatte 61 weist unten eine verschieblich in Fahrtrichtung und auch in Querrichtung dazu ausgebildete Führungsschiene 62 auf.

Die Fig. 3 zeigt eine Draufsicht auf die Geräteeinheit 3 und verdeutlicht, dass der Seitenrahmen 13 doppelschnittig mit der Geräteeinheit 3 verbunden ist. Der Seitenrahmen 13 umgreift dabei praktisch das Getriebe 70 U-förmig. Diese Art der Seitenrahmenanordnung sichert eine extrem niedrige Bauweise. Die Fig. 3 zeigt auch einen Teil des Zentralrahmens 12, an dem der Seitenrahmen 13 über die Schwenkachse 15 schwenkbar verbunden ist.

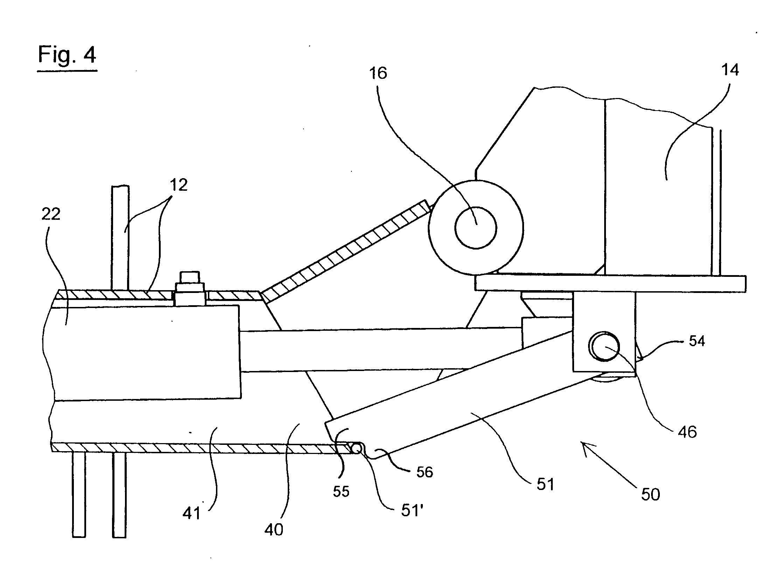

Fig. 4 zeigt den Zentralrahmen 12, der als Hohlträger 40 mit Hohlraum 41 ausgebildet ist. Im Hohlraum 41 des Trägers ist der jeweilige Hydraulikzylinder 22, 22' untergebracht. Im Hohlträger 40 sind die Anlenkpunkte 42, 43 für den Hydraulikzylinder 22 vorgesehen, während die Anlenkpunkte 45, 46 für die Kolbenstange des Hydraulikzylinders 22 mit dem jeweiligen Seitenrahmen 13, 14 in Verbindung stehen.

Fig. 4 verdeutlicht auch die Anordnung einer Transportverriegelung 50 mit Fallriegel 51. In der Transportrichtung stützt sich der Fallriegel 51 gegen die Kante 51' des Hohlträgers 40 ab. Dabei ist der Fallriegel 51 im Abstand zur Schwenkachse 16 über den Anlenkpunkt 46 mit dem Seitenrahmen 14 verbunden. Dieser Abstand erleichtert das Aufbringen der notwendigen Kraft für das Verschwenken des Seitenrahmens 13 bzw. 14.

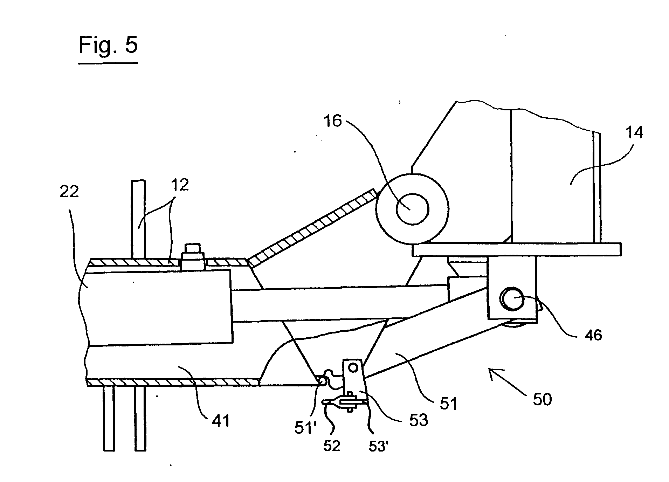

Fig. 5 entspricht im Wesentlichen der Fig. 4, nur dass hier eine Hilfsvorrichtung gezeigt ist, mit der der Fallriegel 51 aus der Sperrstellung gemäß Fig. 4 wieder herausbewegt werden kann. Fig. 4 verdeutlicht nämlich, dass das auf dem Boden des Zentralrahmens 12 schleifende Ende 55 des Fallriegels 51 eine Nase 56 aufweist, die sich in der Endstellung hinter der Kante 51' verhakt bzw. ein Abstützen des Fallriegels 51 auf dieser Kante 51' erlaubt. Nach Fig. 5 dient zum Entriegeln des Fallriegels 51 eine Klinke 53 mit Seilzug 52. Die Klinke 53 ist am Zentralrahmen 12 gelenkig angeordnet und besitzt an ihrer unteren Kante eine nach innen weisende Platte 53', die bei Betätigen des Seilzuges 52 den Fallriegel 51 anhebt und so entriegelt. Der Fallriegel 51, der am Ende 54 gelenkig um den Anlenkpunkt 46 angeordnet ist, kann entsprechend nach dem Hochschwenken wieder in das Innere des Hohlträgers 40 hineingeschoben werden, was durch Einziehen der Kolbenstange des Hydraulikzylinders 22 erfolgt.

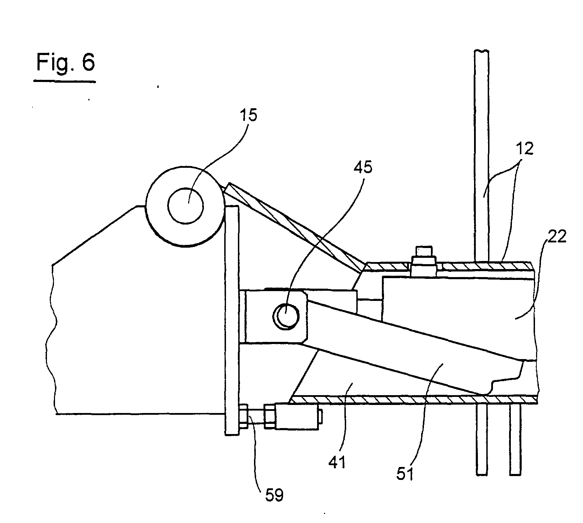

Fig. 6 schließlich verdeutlicht die geschützte Unterbringung des Hydraulikzylinders 22 und des Fallriegels 51 in der ausgeklappten Arbeitsstellung. Diese ausgeklappte Arbeitsstellung wird über einen Anschlag 59 begrenzt, der einstellbar ausgebildet ist.

## Patentansprüche

1. Bodenbearbeitungsgerät, insbesondere Kreiselegge (1), mit mindestens zwei über je ein Getriebe (70) angetriebenen Geräteeinheiten (2, 3), die in Arbeitsstellung quer zur Arbeitsrichtung des Zugfahrzeuges angeordnet und mit einem an das Zugfahrzeug ankoppelbaren Tragrahmen (9), um den die Geräteeinheiten (2, 3) über Hydraulikzylinder (22) in eine Transportstellung schwenkbar angeordnet sind, wobei der Tragrahmen (9) aus einem Zentralrahmen (12) und mit den Geräteeinheiten (2, 3) verbundenen Seitenrahmen (13, 14) besteht, **dadurch gekennzeichnet**, daß der Zentralrahmen (12) als bezüglich des Hohlraumes (41) den Hydraulikzylindern (22) angepasster Hohlträger (40) mit im Hohlträger angeordneten Anlenkpunkten (42, 43) für die Hydraulikzylinder (22) ausgebildet ist und wobei die Seitenrahmen (13, 14) jeweils korrespondierende Anschlagpunkte (45, 46) aufweisen und dass die mit dem Zentralrahmen (12) verbundenen Seitenrahmen (13, 14) über in Arbeitsrichtung und horizontal angeordnete jeweils beidseitig eines Getriebes (70) liegende Schwenklagerungen (17, 18) für die Geräteeinheiten (2, 3) verfügen, die annähernd mittig der Geräteeinheiten (2, 3) angeordnet sind und eine in deren Längsrichtung vor und eine hinter dem Getriebe (70) positionierte Lagerstelle (17', 18') aufweisen, wobei die Seitenrahmen (13, 14) das Getriebe (70) U-förmig umgreifend ausgebildet sind.

2. Bodenbearbeitungsgerät nach Anspruch 1,
**dadurch gekennzeichnet,**
dass die Seitenrahmen (13, 14) um horizontale, in Arbeitsrichtung versetzt liegende Schwenkachsen (15, 16) schwenkbar ausgebildet sind und dass die Anlenkpunkte (45, 46) im Abstand dazu vor Kopf der Seitenrahmen (13, 14) liegend angeordnet sind.

3. Bodenbearbeitungsgerät nach einem der vorhergehenden Ansprüche,
**dadurch gekennzeichnet,**
dass der Zentralrahmen (12) endseitig offen und etwa mittig die Anlenkpunkte (42, 43) für je einen Hydraulikzylinder (22, 22') aufweisend ausgebildet ist.

4. Bodenbearbeitungsgerät nach einem der vorhergehenden Ansprüche,
**dadurch gekennzeichnet,**
dass der Zentralrahmen (12) als nach unten offenes, einige über die Länge verteilt angeordnete Querverbinder aufweisendes U-Profil ausgebildet ist.

5. Bodenbearbeitungsgerät nach einem der vorhergehenden Ansprüche,
**dadurch gekennzeichnet,**
dass die Schwenklagerungen (17, 18) Pendelachsen aufweisen, die in ihrer Schwenkfreiheit begrenzbar ausgebildet sind.

6. Bodenbearbeitungsgerät nach einem der vorhergehenden Ansprüche,
**dadurch gekennzeichnet,**
dass den Seitenrahmen (13, 14) eine gegen ein unbeabsichtigtes Ausschwenken der Geräteeinheiten (2, 3) sperrende Transportverriegelung (50) zugeordnet ist.

7. Bodenbearbeitungsgerät nach einem der vorhergehenden Ansprüche,
**dadurch gekennzeichnet,**
dass die Transportverriegelung (50) über einen im Hohlträger (40) verschieblich angeordneten Fallriegel (51) verfügt, der an einem Ende (54) über den Anlenkpunkt (45; 46) mit dem Seitenrahmen (13; 14) gelenkig verbunden ist und am anderen, auf dem Boden des Hohlträgers (40) schleifenden Ende (55) eine sich im Sperrzustand gegen die Kante (51') des Hohlträgers (40) abstützende Nase (56) aufweist.

8. Bodenbearbeitungsgerät nach einem der vorhergehenden Ansprüche,
**dadurch gekennzeichnet,**
dass dem Fallriegel (51) eine Klinke (53) mit Seilzug (52) zugeordnet ist, die am Zentralrahmen (12) schwenkbar angeordnet ist und eine gegen den Fallriegel (51) anhebbare Platte (53') aufweist.

9. Bodenbearbeitungsgerät nach einem der vorhergehenden Ansprüche,
**dadurch gekennzeichnet,**
dass die Seitenrahmen (13, 14) und der Zentralrahmen (12) einen die ausgeklappte Stellung vorgebenden, einstellbar ausgebildeten Anschlag (59) aufweisen.

10. Bodenbearbeitungsgerät nach einem der vorhergehenden Ansprüche,
**dadurch gekennzeichnet,**
dass die um den Hohlträger (50) schwenkbar gelagerten Geräteeinheiten (2, 3) mit einer die Erde über eine Führungsschiene (62) nach innen leitenden Seitenplatte (61) ausgerüstet sind.

11. Bodenbearbeitungsgerät nach einem der vorhergehenden Ansprüche,
**dadurch gekennzeichnet,**
dass die Seitenplatten (61) um der Oberseite (65) der Geräteeinheiten (2, 3) zugeordnete horizontale Achsen (63) schwenkbar angeordnet sind.

12. Bodenbearbeitungsgerät nach einem der vorhergehenden Ansprüche,
**dadurch gekennzeichnet,**
dass die Führungsschiene (62) höhenverstellbar mit der Seitenplatte (61) verbunden ist.

13. Bodenbearbeitungsgerät nach einem der vorhergehenden Ansprüche,
**dadurch gekennzeichnet,**
dass die Führungsschiene (62) in Fahrtrichtung bzw. entgegengesetzt verschiebbar mit der Seitenplatte (61) verbunden ist.

## Claims

1. Soil cultivation device, in particular circular spike harrow (1) with at least two device units (2, 3) driven via a gearing (70) in each case, which, in the operating position, are arranged transverse to the operating direction of the towing vehicle and with a support frame (9) which can be coupled to the towing vehicle, around which support frame (9) the device units (2, 3) are pivotally arranged in a transporting position via hydraulic cylinders (22), wherein the support frame (9) consists of a central frame (12) and side frames (13, 14) connected to the device units (2, 3), **characterised in that** the central frame (12) is designed as a hollow support (40) adapted to the hydraulic cylinders (22) with respect to the hollow space (41) and with coupling points (42, 43) arranged in the hollow support for the hydraulic cylinders (22) and wherein the side frames (13, 14) have corresponding stop points (45, 46), in each case, and in that the side frames (13, 14) connected to the central frame (12) have pivotal mountings (17, 18) for the device units (2, 3) arranged in the operating direction and horizontally and located, in each case, on either side of a gearing (70), which device units (2, 3) are arranged approximately in the centre of the device units (2, 3) and have a mounting position (17', 18') positioned in their longitudinal direction in front of and behind the gearing (70), wherein the side frames (13, 14) are designed to grasp the gearing (70) in a U-shape.

2. Soil cultivation device according to claim 1, **characterised in that** the side frames (13, 14) are designed to be pivotal around horizontal pivotal axes (15, 16) located so as to be offset in the operating direction and in that the coupling points (45, 46) are arranged spaced therefrom in front of the head of the side frames (13, 14).

3. Soil cultivation device according to one of the preceding claims, **characterised in that** the central frame (12) is open at the end and is designed to have coupling points (42, 43) approximately in the centre for a hydraulic cylinder (22, 22') in each case.

4. Soil cultivation device according to one of the preceding claims, **characterised in that** the central frame (12) is designed as a U-profile which is open at the bottom and has a plurality of transverse connectors distributed over the length.

5. Soil cultivation device according to one of the preceding claims, **characterised in that** the pivotal mountings (17, 18) have reciprocating axes which are designed so they can be limited in their freedom to pivot.

6. Soil cultivation device according to one of the preceding claims, **characterised in that** a transport lock (50) blocking the device units (2, 3) from unintentionally pivoting out, is associated with the side frames (13, 14).

7. Soil cultivation device according to one of the preceding claims, **characterised in that** the transport lock (50) has a fall bar (51) displaceably arranged in the hollow support (40), which fall bar (51) is connected at one end (54), in an articulated manner, to the side frame (13; 14) via the coupling point (45; 46) and, at the other end (55) dragging on the base of the hollow support (40), has a nose (56) supported, in the blocked state, against the edge (51') of the hollow support (40).

8. Soil cultivation device according to one of the preceding claims, **characterised in that** a pawl (53) with a cable pull (52) is associated with the fall bar (51), which pawl (53) is pivotably arranged on the central frame (12) and has a plate (53') which can be raised against the fall bar (51).

9. Soil cultivation device according to one of the preceding claims, **characterised in that** the side frames (13, 14) and the central frame (12) have a stop (59) which defines the hinged position and is adjustable in design.

10. Soil cultivation device according to one of the preceding claims, **characterised in that** the device units (2, 3) pivotally mounted round the hollow support (50) are equipped with a side plate (61) guiding the soil inwards via a guide rail (62).

11. Soil cultivation device according to one of the preceding claims, **characterised in that** the side plates (61) are pivotally arranged round the horizontal axes (63) associated with the upper side (65) of the device units (2, 3).

12. Soil cultivation device according to one of the preceding claims, **characterised in that** the guide rail (62) is connected to the side plate (61) in a height adjustable manner.

13. Soil cultivation device according to one of the preceding claims, **characterised in that** the guide rail (62) is displaceably connected to the side plate (61) in the direction of travel or the opposing direction.

## Revendications

1. Outil de travail du sol, notamment herse rotative (1), comportant deux unités d'outil (2,3), qui sont entraînées par l'intermédiaire de mécanismes respectifs (70) et qui, dans la position de travail, sont disposés transversalement par rapport à la direction de travail du véhicule tracteur, et comportant un cadre de support (9), qui peut être accouplé au véhicule tracteur, cadre autour duquel les unités d'outil (2,3) sont montées de manière à pouvoir pivoter sous l'action de vérins hydrauliques (22) pour venir dans une position de transport, et dans lequel le cadre de support (9) est constitué par un cadre central (12) et des cadres latéraux (13,14) qui sont reliés aux unités d'outil (2,3), **caractérisé en ce que** le cadre central (12) est agencé sous la forme d'un support creux (40) qui, avec sa cavité (41), est adapté aux vérins hydrauliques (22), comporte des points d'articulation (42,43) disposés dans le support creux et prévus pour les vérins hydrauliques (22), et dans lequel les cadres latéraux (13,14) comportent des points correspondants respectifs d'articulation (45,46) ; et en ce que les cadres latéraux (13,14) reliés au cadre central (12) disposent, pour les unités d'outil (2,3), de supports pivotants (17,18) qui sont situés, horizontalement et dans la position de travail, respectivement des deux côtés d'un mécanisme (70), qui sont disposés approximativement au centre des unités d'outil (2,3), et qui possèdent un point de support (17',18') positionné dans la direction longitudinale de ces unités, l'un en avant et l'autre en arrière du mécanisme (70), les cadres latéraux (13,14) étant agencés de manière à entourer en forme de U le mécanisme (70).

2. Outil de travail du sol selon la revendication 1, **caractérisé en ce que** les cadres latéraux (13,14) sont agencés de manière à pouvoir pivoter autour d'axes horizontaux de pivotement (15,16), qui sont décalés dans la direction de travail, et en ce que les points d'articulation (45,46) sont disposés à distance de ces axes, en avant de la tête des cadres latéraux (13,14).

3. Outil de travail du sol selon l'une des revendications précédentes, **caractérisé en ce que** le cadre central (12) est ouvert à son extrémité, et les points d'articulation (42,43) pour les vérins hydrauliques respectifs (22,22') sont disposés approximativement au centre.

4. Outil de travail du sol selon l'une des revendications précédentes, **caractérisé en ce que** le cadre central (12) est agencé sous la forme d'un profilé en U ouvert vers le bas, qui comporte quelques éléments de liaison transversaux répartis sur la longueur.

5. Outil de travail du sol selon l'une des revendications précédentes, **caractérisé en ce que** les supports pivotants (17,18) possèdent des axes pendulaires, qui sont agencés de telle sorte que leur liberté de pivotement peut être limitée.

6. Outil de travail du sol selon l'une des revendications précédentes, **caractérisé en ce qu**'un système de verrouillage pour le transport (50), qui réalise un blocage vis-à-vis d'un écartement intempestif par pivotement des unités d'outil (2,3), est associé aux cadres latéraux (13,14).

7. Outil de travail du sol selon l'une des revendications précédentes, **caractérisé en ce que** le dispositif de verrouillage pour le transport (50) comporte un loquet (51), qui est disposé de manière à être déplaçable dans le support creux (40), qui est relié d'une manière articulée, par une extrémité (54), au cadre latéral (13;14) par l'intermédiaire du point d'articulation (45,46), et qui possède, au niveau de l'autre extrémité (55), qui glisse sur la base du support creux (40), un bec (56) qui, à l'état bloqué, prend appui contre le bord (51') du support creux (40).

8. Outil de travail du sol selon l'une des revendications précédentes, **caractérisé en ce qu**'au loquet (51) est associé un cliquet (53) qui est pourvu d'un câble de traction (52), qui est monté de manière à pouvoir pivoter sur le cadre central (12), et qui possède une plaque (53') pouvant être soulevée contre le loquet (51).

9. Outil de travail du sol selon l'une des revendications précédentes, **caractérisé en ce que** les cadres latéraux (13,14) et le cadre central (12) possèdent une butée (59) qui détermine la position écartée par rabattement et est agencée de manière à être réglable.

10. Outil de travail du sol selon l'une des revendications précédentes, **caractérisé en ce que** les unités d'outil (2,3), qui sont montées de manière à pouvoir pivoter autour du support creux (50), sont équipées d'une plaque latérale (61), qui guide vers l'intérieur la terre par l'intermédiaire d'un rail de guidage (62).

11. Outil de travail du sol selon l'une des revendications précédentes, **caractérisé en ce que** les plaques latérales (61) sont disposées de manière à pouvoir pivoter autour d'axes horizontaux (63) associés à la face supérieure (65) des unités d'outil (2,3).

12. Outil de travail du sol selon l'une des revendications précédentes, **caractérisé en ce que** le rail de guidage (62) est relié, de manière à être réglable en hauteur, à la plaque latérale (61).

13. Outil de travail du sol selon l'une des revendications précédentes, **caractérisé en ce que** le rail de guidage (62) est relié à la plaque latérale (61), en étant déplaçable dans la direction de déplacement ou en sens opposé.
